Europäisches Patentamt

European Patent Office

Office européen des brevets

(19)

(11) Numéro de publication: **0 196 944**

**A1**

(12) # DEMANDE DE BREVET EUROPEEN

(21) Numéro de dépôt: **86400449.4**

(22) Date de dépôt: **04.03.86**

(51) Int. Cl.⁴: **G 08 B 15/02**
**B 60 R 11/02**

(30) Priorité: **15.03.85 FR 8503849**

(43) Date de publication de la demande:
**08.10.86 Bulletin 86/41**

(84) Etats contractants désignés:
**AT BE CH DE GB IT LI NL**

(71) Demandeur: **Sionis, Roger**
**1, rue de Montgerain**
**F-60420 Coivrel(FR)**

(72) Inventeur: **Sionis, Roger**
**1, rue de Montgerain**
**F-60420 Coivrel(FR)**

(54) **Dispositif de destruction d'un appareil de bord en cas de vol.**

(57) Un boîtier 1 est fixé dans l'appareil de bord, alimenté en permanence en courant électrique. Une cartouche 6 branchée sur le boîtier 1 contient une résistance 16 de mise à feu, un détonateur 17 et une ampoule d'acide 18. En cas de vol, le déplacement de l'appareil, faisant retomber un contact de position 3, et la coupure de l'alimentation, provoquent ensemble la mise à feu par décharge d'un condensateur 15 et la destruction par la projection de l'acide, de l'appareil, si le dispositif "barrette codée" 5 n'est pas en fonction.

EP 0 196 944 A1

./...

Fig. 2

L'invention concerne un dispositif de destruction d'un appareil de bord en cas de vol, plus particulièrement applicable, dans les véhicules automobiles, aux postes de radio, aux lecteurs de cassettes, aux enceintes acoustiques, aux appareils téléphoniques, ou autres.

Ces appareils de bord comportent généralement des circuits imprimés sur lesquels sont montés des composants électroniques. Ces appareils sont volés dans les véhicules en stationnement, en vue de leur revente par des réseaux spécialisés. Pour dissuader le vol, il a paru souhaitable d'ôter à l'appareil toute valeur de revente en lui faisant subir, en cas d'enlèvement, un dommage tel que sa réparation ne soit pas envisageable dans des conditions économiques acceptables.

L'un des buts de l'invention est de proposer un dispositif assurant la destruction de l'appareil de bord faisant l'objet d'un vol sans toutefois que cette destruction occasionne une blessure ou une mutilation pour le voleur.

Un autre but de l'invention est de prévoir, dans cet appareil, une commande de sécurité pour permettre une intervention sur l'appareil sans risque de le détruire.

L'invention a pour objet un dispositif de destruction d'un appareil de bord en cas de vol, caractérisé en ce qu'il comporte : un boîtier placé à l'intérieur de l'appareil de bord, alimenté en permanence en courant électrique, et muni d'un contact de position bloqué en position de travail par l'appareil, et susceptible de retomber en position de repos si l'appareil est déplacé ; et une cartouche à mise à feu électrique, branchée sur le boîtier et contenant un produit susceptible de détruire l'appareil de telle sorte que la retombée du contact de position et la coupure de l'alimentation du boîtier entraînent ensemble la mise à feu de la cartouche et la destruction de l'appareil.

Selon d'autres caractéristiques de l'invention :

- un premier relais est alimenté en permanence et commande la montée en position de travail d'un contact mobile pour charger un condensateur,

- en parallèle sur le condensateur sont montés en série une barrette de codage susceptible d'assurer une connexion électrique lorsque le code choisi est affiché, et un deuxième relais commandant la montée en position de travail d'un contact mobile afin d'assurer la décharge du condensateur avant toute intervention,

- un voyant lumineux est prévu entre l'alimentation et le contact de position pour indiquer que le dispositif est alimenté et prévenir qu'une tentative de vol entraînera la destruction de l'appareil,

- un bilame est prévu pour faire clignoter le voyant, afin d'indiquer que le contact de position est retombé accidentellement,

- la cartouche de destruction de l'appareil comporte une résistance de mise à feu d'un détonateur susceptible de provoquer l'éclatement d'une ampoule d'acide et de l'enveloppe de la cartouche, afin d'assurer la destruction de l'appareil au moyen de l'acide.

L'invention a encore pour objet l'application à la destruction d'un appareil de bord, d'une cartouche à mise à feu électrique comportant une résistance de mise à feu, un détonateur et une ampoule d'acide dont l'éclatement est assuré par le détonateur.

D'autres caractéristiques de l'invention ressortent de la description qui suit faite avec référence au dessin annexé sur lequel on peut voir :

Figure 1, une vue schématique du dispositif de destruction d'un appareil de bord selon un mode de réalisation de l'invention;

Figure 2, un schéma d'un exemple de réalisation du circuit électrique du dispositif de destruction selon l'invention.

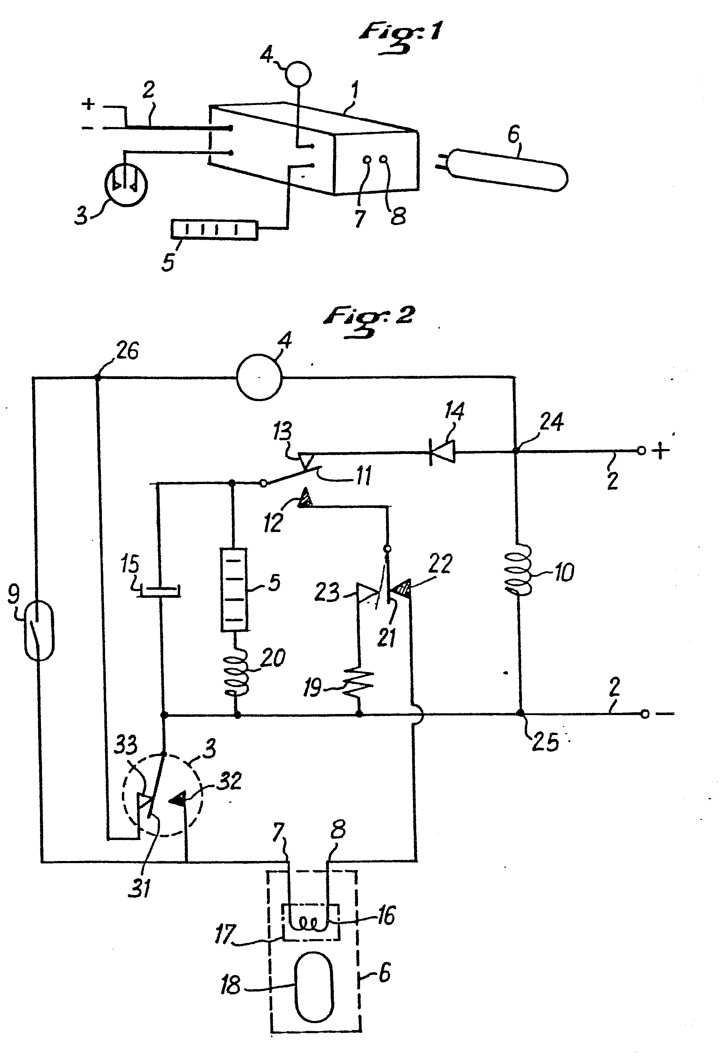

En se reportant à la figure 1, on voit que le dispositif de destruction se compose essentiellement d'un petit boîtier 1 portant une connexion d'alimentation 2, un contact 3 de position à trois fils dont le rôle sera expliqué plus loin, un voyant lumineux 4, une barrette de codage 5, et une cartouche destructrice 6 à déclenchement électrique susceptible d'être branchée aux points 7 et 8.

Ces différents éléments se retrouvent sur la figure 2 avec les mêmes références. Les deux fils d'alimentation (2) sont identifiés par le signe de leur polarité et arrivent respectivement aux points 24 pour le + et 25 pour le -.

Entre les points 24 et 25 est branché un premier relais 10, commandant un contact 11 mobile entre un contact de repos 12 et un contact de travail 13. Ce contact de travail 13 est relié au point 24 par l'intermédiaire d'une diode 14.

Entre le contact mobile 11 et le point 25 sont montés en parallèle d'une part un condensateur 15, d'autre part la barrette de codage 5 en série avec un second relais 20 à auto-maintien qui commande un contact 21 mobile entre un contact de repos 22 et un contact de travail 23. Le contact mobile 21 est directement relié au contact de repos 12. Le contact de travail 23 est relié au point 25 par l'intermédiaire d'une résistance 19. Le contact de repos 22 est relié directement au point 8.

0196944

Par ailleurs, le contact de position 3 comporte un contact mobile 31 relié au point 25, un contact de repos 32 relié au point 7 et un contact de travail 33 reliée au point 26. Entre ce point 26 et le point 24 de l'alimentation est branché le voyant 4. Entre le point 26 et le point 7 est branché un bilame 9.

Entre les points 7 et 8 se trouve branchée la résistance 16 destinée à assurer la mise à feu d'un détonateur pyrotechnique 17. Ce détonateur est destiné à faire éclater une ampoule d'acide 18 et l'enveloppe de la cartouche 6, de façon à provoquer l'écoulement de l'acide dans l'appareil afin de le détruire, ou à tout le moins de l'endommager suffisamment pour le rendre invendable.

Le fonctionnement du dispositif s'analyse de la manière suivante : tout d'abord, le boîtier 1 est fixé, par collage par exemple, dans l'appareil à détruire. Le voyant 4 est apparent sur la planche de bord , à la fois pour montrer que cet appareil est sous surveillance et pour indiquer que l'alimentation électrique est assurée (voyant allumé). Si le contact 31 retombe accidentellement sur le contact de repos 32, le voyant 4 se met à clignoter sous l'action du bilame 9. La barrette 5 est placée à un endroit accessible pour permettre le codage. Cette barrette porte par exemple des roues codeuses, et lorsque le code prévu est affiché, une connexion électrique s'établit entre l'entrée et la sortie de la barrette 5. En l'absence du code, la connexion électrique est coupée. Le contact de position 3 est placé en position de travail et maintenu dans cette position par blocage mécanique au moyen de l'appareil à détruire. De cette façon, si l'appareil est déplacé, le contact mobile 31 retombe sur le contact de repos 32. La cartouche 6 est branchée par enfichage de ses broches bloquantes dans les points de contact 7, 8. Enfin les deux conducteurs d'alimentation 2 sont branchés directement sur la batterie de bord par exemple.

Lorsque l'alimentation des points 24 et 25 est assurée, le relais 10 est excité. Le contact mobile 11 monte alors et s'applique sur le contact de travail 13. De ce fait, le condensateur 15 se charge. Parallèlement, le contact de position 3 étant fermé sur le contact de travail 33, le voyant lumineux 4 est allumé. Enfin la barrette de codage 5 étant brouillée (code non affiché), le relais 20 n'est pas alimenté et le contact mobile 21 est appliqué sur le contact de repos 22. Le circuit électrique de la résistance 16 étant ouvert au contact de repos 12, aucun courant ne passe dans cette résistance 16 et l'appareil est à l'état de veille.

Si l'appareil est déplacé, le contact 3 est libéré et son contact mobile 31 retombe sur le contact de repos 32.

Par l'intermédiaire des contacts 32 et 31, le bilame 9 est alors alimenté, et il fait clignoter le voyant 4, signalant un incident au contact 3. Si cet incident est fortuit, ou dû aux vibrations du véhicule par exemple, le conducteur peut intervenir pour remettre le contact 3 en position de travail. Si cet incident résulte d'une tentative de vol, la poursuite de cette tentative doit être la coupure des fils d'alimentation. Lorsque cette coupure intervient, le relais 10 n'est plus alimenté, et le contact mobile 11 retombe sur le contact de repos 12. Le condensateur 15 se décharge alors par le circuit 11-12-21-22-16-32-31, et la résistance 16 chauffe suffisamment pour provoquer la mise à feu du détonateur 17 qui, à son tour, provoque l'éclatement de l'ampoule d'acide 18 et de l'enveloppe de la cartouche 6. L'acide se répand alors dans l'appareil et détériore les circuits imprimés et les composants de façon suffisamment grave pour rendre trop coûteuse la remise en état de l'appareil en vue de sa revente dans un circuit clandestin.

Il faut remarquer que le vol de l'appareil se traduit par deux conditions : l'appareil doit être déplacé de son logement, et son alimentation doit être coupée. La destruction de l'appareil n'intervient que lorsque les deux conditions sont réalisées.

Si le conducteur veut intervenir sur l'appareil, il lui suffit d'afficher le code choisi sur la barrette de codage 5. La connexion électrique s'établit alors dans la barrette et le relais 20 à auto-maintien est alimenté. Il commande alors le mouvement du contact mobile 21 vers le contact de travail 23. Le conducteur coupe alors l'alimentation et le contact 11 retombe en 12. Le condensateur 15 se décharge alors par le circuit 11-12-21-23-19, avant que le contact 21 ne retombe.

L'intervention est alors possible sans danger pour l'appareil puisque le condensateur est déchargé.

On voit donc que le dispositif selon l'invention est particulièrement dissuasif puisqu'il prévient le voleur de la destruction subséquente de l'appareil en cas de vol. Par ailleurs il permet d'intervenir sur l'appareil en toute sécurité après affichage du code sur la barrette. Enfin, il est particulièrement efficace, mais sans danger pour les personnes car tout se passe à l'intérieur de l'appareil.

Revendications

0196944

1. Dispositif de destruction d'un appareil de bord en cas de vol, caractérisé en ce qu'il comporte : un boîtier (1) placé à l'intérieur de l'appareil de bord, alimenté en permanence en courant électrique, et muni d'un contact de position (3) bloqué en position de travail par l'appareil, et susceptible de retomber en position de repos si l'appareil est déplacé ; et une cartouche (6) à mise à feu électrique, branchée sur le boîtier (1) et contenant un produit susceptible de détruire l'appareil de telle sorte que la retombée du contact de position (3) et la coupure de l'alimentation du boîtier (1) entraînent ensemble la mise à feu de la cartouche (6) et la destruction de l'appareil.

2. Dispositif selon la revendication 1, caractérisé en ce qu'un premier relais (10) est alimenté en permanence et commande la montée en position de travail d'un contact mobile (11) pour charger un condensateur (15).

3. Dispositif selon la revendication 2, caractérisé en ce qu'en parallèle sur le condensateur (15) sont montés en série une barrette de codage (5) susceptible d'assurer une connexion électrique lorsque le code choisi est affiché, et un deuxième relais (20) commandant la montée en position de travail d'un contact mobile (21) afin d'assurer la décharge du condensateur (15) avant toute intervention.

4. Dispositif selon la revendication 1, caractérisé en ce qu' un voyant lumineux (4) est prévu entre l'alimentation et le contact de position (3) pour indiquer que le dispositif est alimenté et prévenir qu'une tentative de vol entraînera la destruction de l'appareil.

5. Dispositif selon la revendication 1, caractérisé en ce qu'un bilame (9) est prévu pour faire clignoter le voyant (4) afin d'indiquer que le contact de position (3) est retombé.

6. Dispositif selon la revendication 1, caractérisé en ce que la cartouche (6) de destruction de l'appareil comporte une résistance (16) de mise à feu d'un détonateur (17) susceptible de provoquer l'éclatement d'une ampoule d'acide (18) et de l'enveloppe de la cartouche (6) afin d'assurer la destruction de l'appareil au moyen de l'acide.

7. Application à la destruction d'un appareil de bord, d'une cartouche à mise à feu électrique comportant une résistance (16) de mise à feu, un détonateur (17) et une ampoule (18) d'acide dont l'éclatement est assuré par le détonateur.

*Fig:1*

*Fig:2*

Office européen
des brevets

**RAPPORT DE RECHERCHE EUROPEENNE**

**0196944**

Numéro de la demande

EP    86  40  0449

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 317 713 (ARNEY ET BUCKLE) <br> * Revendications * | 1 | G 08 B   15/02 <br> B 60 R   11/02 |
| | --- | | |
| A | US-A-3 676 945 (NEANHOUSE) <br> * Abrégé * | 1,7 | |
| | --- | | |
| A | FR-A-2 357 016 (D'AGOSTINO) <br> * Revendications * | 1,4 | |
| | ----- | | |

DOMAINES TECHNIQUES RECHERCHES (Int. Cl.4)

G 08 B
B 60 R
E 05 G
H 05 K

Le présent rapport de recherche a été établi pour toutes les revendications

| Lieu de la recherche | Date d'achèvement de la recherche | Examinateur |
|---|---|---|
| LA HAYE | 30-06-1986 | REEKMANS M.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82